# EUROPÄISCHE PATENTSCHRIFT

(11) **EP 3 461 608 B1**
(45) Veröffentlichungstag und Bekanntmachung des Hinweises auf die Patenterteilung: **31.03.2021**
(21) Anmeldenummer: 18197615.0
(22) Anmeldetag: 28.09.2018
(51) Int. Cl.: B27D 5/00

(54) **BESCHICHTUNGSVORRICHTUNG SOWIE BESCHICHTUNGSVERFAHREN**
COATING DEVICE AND COATING METHOD
DISPOSITIF DE REVÊTEMENT AINSI QUE PROCÉDÉ DE REVÊTEMENT

(30) Priorität: 29.09.2017 DE 102017122701
(43) Veröffentlichungstag der Anmeldung: 03.04.2019
(73) Patentinhaber: HOMAG GmbH, 72296 Schopfloch (DE)
(72) Erfinder: Schmid, Johannes, 72181 Starzach (DE)
(74) Vertreter: Hoffmann Eitle

(56) Entgegenhaltungen:
- EP-A1- 2 308 659
- EP-A2- 1 800 813
- WO-A1-2007/021235
- DE-A1-102015 000 043
- DE-A1-102016 213 216
- DE-B3-102015 008 891
- DE-U1-202008 015 878

## Beschreibung

### Technisches Gebiet

Die vorliegende Erfindung betrifft eine Beschichtungsvorrichtung, gemäß dem Oberbegriff des Anspruchs 1. Ferner betrifft die vorliegende Erfindung ein Beschichtungsverfahren, gemäß dem Oberbegriff des Anspruchs 11. Eine derartige Beschichtungsvorrichtung und ein solches Beschichtungsverfahren sind aus dem Dokument EP1800813A2 bekannt.

### Stand der Technik

Beim Beschichten plattenförmiger Werkstücke an deren Schmalseite ist es im Stand der Technik bekannt, ein vorbeschichtetes Beschichtungsmaterial einzusetzen, dessen Haftschicht kurz vor dem Anbringen des Beschichtungsmaterials an der Schmalseite des Werkstücks aktiviert wird. Auch sind in diesem Zusammenhang koextrudierte Beschichtungsmaterialien bekannt.

Gemäß einer weiteren Möglichkeit kann ein Beschichtungsmaterial vor dem Anbringen des Beschichtungsmaterials an der Schmalseite des Werkstücks mit einem Haftmittel versehen werden.

Darüber hinaus sind Vorrichtungen bekannt, bei denen das Haftmittel an der Schmalseite des Werkstücks aufgebracht und nachfolgend an dieser, mit dem Haftmittel benetzten Schmalseite ein Beschichtungsmaterial aufgebracht wird.

Beispielsweise ist aus der EP 2 428 340 A1 eine Haftmittelzuführeinrichtung zur Aufbringung eines Haftmittels auf einem Werkstück bekannt. Diese Haftmittelzuführeinrichtung umfasst eine Basis sowie ein oberhalb der Basis angeordnetes bewegliches Oberteil mit Kanten zum Fokussieren des Haftmittels. Darüber hinaus ist ein an der Basis angebrachtes Haftmittelübertragungswerkzeug vorgesehen, insbesondere eine Leimwalze, wobei im Betrieb der Haftmittelzuführeinrichtung das Haftmittel vom Oberteil zum Haftmittelübertragungswerkzeug zugeführt wird. Um die Menge des Haftmittels zu dosieren, umfasst die Haftmittelzuführeinrichtung einen Verstellmechanismus zur Einstellung der Position des Oberteils relativ zum Haftmittelübertragungswerkzeug.

Ferner ist aus der EP 2 251 171 A1 eine Vorrichtung zum Beschichten von Werkstücken bekannt, die eine Zuführeinrichtung zum Zuführen eines Beschichtungsmaterials zu einer zu beschichtenden Oberfläche eines Werkstücks, eine Andruckeinrichtung zum Andrucken des Beschichtungsmaterials an die zu beschichtende Oberfläche des Werkstücks und eine Fördereinrichtung zum Herbeiführen einer Relativbewegung zwischen dem Werkstück und zumindest der Andruckeinrichtung aufweist.

Darüber hinaus ist die DE 20 2009 006 794 U1 bekannt, die ein Anleimaggregat betrifft.

Die WO 2007/021235 A1 beschreibt ein Verfahren zum Herstellen von Schichtsubstraten, wobei ein Haftmittelauftrag bei der Herstellung überwacht und gesteuert wird.

In der EP 1 800 813 A2 wird ein Verfahren zum Beschichten von Bauteilen beschrieben, wobei eine solide Beschichtung, insbesondere aus einem Echtholzfurnier, auf eine Fläche des Bauteils aufgebracht wird. Die zu beschichtende Fläche des Bauteils kann dabei eine Breit- oder Schmalfläche, z.B. die Arbeitsfläche oder Stirnfläche einer Küchenarbeitsplatte sein.

Die DE 10 2016 213 216 A1 beschreibt eine Maschine zum Kantenanleimen von Platten aus Holz oder Ähnlichem, in der jede Platte mit einer jeweiligen Abschlusskante bekantet wird, die auf der Platte durch eine Kantenanleimgruppe angebracht wird, die mit einer Gummierungsvorrichtung versehen ist, um Kleber auf die Abschlusskante oder auf die Platte aufzutragen, mit einer Niederhaltervorrichtung, um die Abschlusskante auf der Platte zu stabilisieren, und mit einer Messvorrichtung, um die Temperatur des Klebers auf der Platte oder auf der Abschlusskante zwischen der Gummierungsvorrichtung und der Niederhaltervorrichtung zu messen.

Trotz der verschiedenen im Stand der Technik bereits bekannten Vorrichtungen, mit denen ein Haftmittel (Klebstoff) auf eine Schmalseite eines plattenförmigen Werkstücks aufgetragen werden kann oder ein vorbeschichtetes Beschichtungsmaterial eingesetzt wird, zeigt sich, dass eine verbesserte Verfahrenstechnik erforderlich ist, um das Haftmittel in optimaler Weise bereitzustellen.

Beispielsweise führt eine zu dicke Haftmittelschicht dazu, dass diese beim Anbringen des Beschichtungsmaterials verschmiert oder eine zu dicke, und damit aus ästhetischen Gründen nicht akzeptable, Fügeschicht ausgebildet wird.

### Gegenstand der Erfindung

Ziel der vorliegenden Erfindung ist es, eine Beschichtungsvorrichtung und ein Beschichtungsverfahren bereitzustellen, mit der/dem den gesteigerten Anforderungen an ein optisches Äußeres und eine hohe Wertigkeit der Verbindung zwischen Beschichtungsmaterial und Werkstück Rechnung getragen wird.

Hierzu wird eine Beschichtungsvorrichtung gemäß Anspruch 1 sowie ein Beschichtungsverfahren gemäß Anspruch 11 bereitgestellt. Weitere bevorzugte Ausführungsformen sind in den abhängigen Ansprüchen aufgeführt, wobei Merkmale der Verfahrensansprüche mit den Vorrichtungsansprüchen kombiniert werden können, und umgekehrt. Weitere bevorzugte Ausführungsformen werden nachfolgend beschrieben.

Die Beschichtungsvorrichtung, die insbesondere zum Beschichten einer Schmalseite eines plattenförmigen Werkstücks geeignet ist, umfasst: ein Andruckelement zum Anbringen eines Beschichtungsmaterials an einer zu beschichtenden Oberfläche eines Werkstücks, wobei bevorzugt ist, dass das Andruckelement zum Anbringen eines Beschichtungsmaterials für eine Schmalseite geeignet ist, und eine Einrichtung zum Herbeiführen einer Relativbewegung zwischen dem Werkstück und dem Andruckelement. Ferner umfasst die Beschichtungsvorrichtung eine Erfassungseinrichtung zum Erfassen einer Oberflächeneigenschaft an der zu beschichtenden Oberfläche des Werkstücks und eine Einrichtung zum Einwirken auf das einzusetzende Haftmittel. Eine Oberflächeneigenschaft kann eine Oberflächentemperatur und/oder eine Oberflächenrauigkeit einer zu beschichtenden Oberfläche sein.

Erfindungsgemäß umfasst die Beschichtungsvorrichtung ein Auftragselement zum Auftragen eines Haftmittels an der zu beschichtenden Oberfläche des Werkstücks, wobei die Beschichtungseinrichtung eingerichtet ist, auf Grundlage des Erfassungsergebnisses der Erfassungseinrichtung die Haftmitteltemperatur am oder im Bereich des Auftragselements zu ändern. Insbesondere kann das Auftragselement ein Heizelement umfassen.

Die "Einrichtung zum Einwirken auf das einzusetzende Haftmittel" ist beispielsweise dazu eingerichtet, die Temperatur des Haftmittels zu erhöhen und/oder die Menge des am Werkstück und/oder am Beschichtungsmaterial bereitzustellenden Haftmittels zu beeinflussen oder zu ändern, beispielsweise zu erhöhen und zu reduzieren.

"Einwirken" meint dabei insbesondere ein Erwärmen oder Kühlen des Haftmittels, eine Beeinflussung/Änderung einer (Material-)Eigenschaft des Haftmittels, Beeinflussung/Änderung einer bereitgestellten Haftmittelmenge, Beeinflussung/Änderung einer Art der Bereitstellung des Haftmittels (beispielsweise punktförmig, streifenförmig, usw.), Zudosieren einer weiteren Komponente zum Haftmittel, oder einer Breite des an der Oberfläche des Werkstücks und dem Beschichtungsmaterials bereitgestellten Haftmittels.

Dabei kann auf ein Haftmittel eingewirkt werden, das am Werkstück oder am Beschichtungsmaterial aufzutragen ist (beispielsweise mittels einer Düse, einer Sprüheinrichtung, einer Walze oder ähnlichem), oder es wird eine Einwirkung an einem bereits am Beschichtungsmaterial vorgesehenen Haftmittel vorgenommen.

Die vorliegende Erfindung hat den Vorteil, dass der Fügeprozess derart überwacht und ggf. gesteuert wird, dass die Haftschicht in optimierter Weise, insbesondere in einer optimalen Menge und/oder mit einem optimalen Wärmehaushalt, zur Verfügung gestellt wird, wodurch wiederum eine verbesserte Verbindung zwischen Beschichtungsmaterial und Werkstück gewährleistet werden kann. Hierdurch ergibt sich ein zügiger Betrieb, der sich bevorzugt für eine variantenreiche Fertigung (Stückzahl-1-Fertigung) eignet.

Bei den im Rahmen der Erfindung zu beschichtenden Werkstücken handelt es sich bevorzugt um plattenförmige Werkstücke, die insbesondere an der Schmalseite mit einem Beschichtungsmaterial (einem sogenannten Kantenstreifen) zu versehen sind.

Bei einem zu beschichtenden Werkstück handelt es sich beispielsweise um eine Spanplatte, eine MDF-Platte, eine HDF-Platte, eine Leichtbauplatte, eine Platte aus Verbundmaterial, eine Massivholzplatte, oder Ähnliches. Rein beispielhaft kann ein beschichtetes Werkstück eine Küchenarbeitsplatte, eine Möbelfront, ein Einlagebrett für einen Schrank oder ein Regal, oder Ähnliches sein.

Es ist bevorzugt, dass die Beschichtungseinrichtung eine Steuereinrichtung umfasst, die eingerichtet ist, das Erfassungsergebnis der Erfassungseinrichtung aufzunehmen und eine Einrichtung zum Ändern einer Eigenschaft des Haftmittels zu betätigen. Auf diese Weise kann auf Randbedingungen einer Charge von Werkstücken, oder auch auf Randbedingungen eines einzelnen Werkstücks, reagiert werden, sodass das Haftmittel für das Anbringen eines Beschichtungsmaterials optimal eingestellt wird.

Es ist bevorzugt, dass die Erfassungseinrichtung derart angeordnet ist, dass die Erfassungseinrichtung die Oberflächeneigenschaft unmittelbar vor dem Auftragen des Haftmittels oder dem Anbringen des mit dem Haftmittel versehenen Beschichtungsmaterials erfasst. Auf diese Weise wird eine hohe Genauigkeit beim Einstellen der optimalen Hafteigenschaften gewährleistet.

Das Auftragselement kann beispielsweise als Auftragswalze, als Sprüheinrichtung oder als Auftragsdüse ausgebildet sein.

Im Falle einer Auftragswalze ist diese bspw. mit einem Heizelement versehen (bspw. einer Heizpatrone). Im Falle der Sprüheinrichtung oder der Auftragsdüse ist bspw. im Bereich der Sprüh- oder Düsenöffnung ein Heizelement oder Wärmestrahler angeordnet, um die Temperatur des Haftmittels unmittelbar vor dem Auftrag auf die zu beschichtende Oberfläche zu beeinflussen/zu ändern.

Gemäß einer weiteren Ausführungsform ist es vorgesehen, dass die Beschichtungsvorrichtung eine Dosiereinrichtung zum Ändern der durch das Auftragselement am Werkstück aufzubringenden Haftmittelmenge umfasst, wobei die Dosiereinrichtung eingerichtet ist, auf Grundlage des Erfassungsergebnisses der Erfassungseinrichtung die Haftmittelmenge zu ändern. Beispielsweise kann ein bestimmtes Material eines Werkstücks eine höhere oder geringere Menge des Haftmittels erfordern, und somit auf das einzusetzende Haftmittel eingewirkt wird.

Insbesondere ist es vorgesehen, dass die Erfassungseinrichtung einen Sensor zum Erfassen der Oberflächenrauigkeit umfasst. Somit kann erfasst werden, ob bspw. im Falle einer relativ rauen Werkstückoberfläche eine größere Haftmittelmenge benötigt wird, oder im Falle einer relativ glatten, porenfreien Oberfläche eine geringere Haftmittelmenge erforderlich ist.

Es ist bevorzugt, dass die Erfassungseinrichtung einen Sensor zum Erfassen der Oberflächentemperatur umfasst, wobei der Sensor insbesondere als IR-Temperatursensor ausgebildet ist.

Somit ist es möglich, zu ermitteln, ob das Werkstück eine "geeignete" Oberflächentemperatur aufweist.

Ist die Oberflächentemperatur des Werkstücks bspw. relativ gering, so kann es erforderlich sein, die Temperatur des Haftmittels zu erhöhen, um eine zu schnelle Aushärtung des Haftmittels oder Abschnitten des Haftmittels zu verhindern. Eine geringere Oberflächentemperatur des Werkstücks kann vorliegen, wenn ein relativ kaltes Werkstück unmittelbar ohne vorhergehende Bearbeitung beschichtet werden soll.

Im Falle einer höheren Oberflächentemperatur kann es zielführend sein, die Temperatur des Haftmittels zu reduzieren, um zu vermeiden, dass die Zeit zum Aushärten des Haftmittels zu lange dauert. Eine erhöhte Oberflächentemperatur kann es sich ergeben, wenn eine bestimmte, eher Wärme erzeugende Bearbeitung durchgeführt wird, bevor das Haftmittel oder das mit dem Haftmittel versehene Beschichtungsmaterial auf diese bearbeitete Oberfläche aufgetragen oder an dieser angebracht wird. In diesem Fall könnte es sein, dass das aufgebrachte Beschichtungsmaterial auf dem teilweise flüssigen und tendenziell über einen längeren Zeitraum aushärtende Haftmittel "schwimmt" und ggf. vor dem vollständigen Aushärten verschoben wird (insbesondere wenn unmittelbar nach dem Aufbringen des Beschichtungsmaterials eine Bearbeitung, wie mit einem Ziehspanwerkzeug, durchgeführt wird.

Es ist bevorzugt, dass es sich bei der Einrichtung zum Herbeiführen einer Relativbewegung zwischen Werkstück und Andruckelement und/oder Auftragselement um einen Riemenförderer, einen Kettenförderer oder einen Bandförderer handelt. Somit ist die Beschichtungsvorrichtung als Durchlaufmaschine ausgebildet.

Gemäß einer alternativen Ausgestaltung kann es jedoch auch vorgesehen sein, dass das Werkstück, zumindest zeitweise, stationär gehalten wird, während das Andruckelement zum Anbringen eines Beschichtungsmaterials entlang des Werkstücks bewegt wird.

Gemäß einer weiteren Ausführungsform ist es vorgesehen, dass eine Prüfeinrichtung zum Prüfen des durch das Auftragselement aufgetragenen Haftmittels vorgesehen ist, wobei es sich bei der Prüfeinrichtung bevorzugt um einen Temperatursensor, insbesondere einen IR-Temperatursensor, handelt. Die Prüfeinrichtung ist in einer Durchlaufrichtung insbesondere vor dem Andruckelement, und weiter bevorzugt nach dem Auftragselement zum Auftragen des Haftmittels an der zu beschichtenden Oberfläche vorgesehen. Bevorzugt steht die Prüfeinrichtung mit der Steuereinrichtung in Verbindung. Gemäß einer weiteren Ausführungsform ist die Prüfeinrichtung eingerichtet, die Dicke des Haftmittelfilms zu ermitteln.

Gemäß einer Ausführungsform umfasst die Beschichtungsvorrichtung eine Aktivierungsvorrichtung, die eingerichtet ist, das Haftmittel des mit dem Haftmittel versehenen Beschichtungsmaterials basierend auf dem Erfassungsergebnis der Erfassungseinrichtung zu aktivieren. Wird beispielsweise eine erhöhte Temperatur an der zu beschichtenden Oberfläche als eine Oberflächeneigenschaft ermittelt, so kann die durch die Aktivierungsvorrichtung am Haftmittel aufzubringende Aktivierungsenergie reduziert und werden, um eine optimale Haftwirkung zu erreichen.

Die Aktivierungsvorrichtung kann ein Laser, eine Heißluftquelle, Infrarotquelle, Ultraschallquelle, Magnetfeldquelle, Mikrowellenquelle, Plasmaquelle und/oder Begasungsquelle sein.

Gemäß einer weiteren Ausführungsform umfasst die Beschichtungsvorrichtung eine Manipulationsvorrichtung zum Manipulieren der zu beschichtenden Oberfläche. Die Manipulationsvorrichtung ist (in Durchlaufrichtung) insbesondere nach der Erfassungseinrichtung und vor dem Andruckelement vorgesehen, bevorzugt zwischen der Erfassungseinrichtung und dem Auftragselement zum Auftragen des Haftmittels, vorgesehen.

Die Manipulationsvorrichtung kann beispielsweise eine Heizeinrichtung sein, um die Oberflächentemperatur an der zu beschichtenden Oberfläche zu erhöhen.

Bevorzugt steht die Manipulationsvorrichtung mit der Steuereinrichtung in Verbindung.

Ferner betrifft die vorliegende Erfindung ein Verfahren mit den Merkmalen des Anspruchs 11. Dabei ist es bevorzugt, dass im Rahmen des Verfahrens die Beschichtungsvorrichtung gemäß einem der vorangegangenen Aspekte zum Einsatz kommt.

Erfindungsgemäß wird das Haftmittel vor dem Anbringen des Beschichtungsmaterials an der zu beschichtenden Oberfläche des Werkstücks aufgebracht.,

Gemäß einer Ausführungsform ist es vorgesehen, dass die Oberflächeneigenschaft eine Oberflächenrauigkeit ist, wobei bevorzugt ist, dass auf Grundlage des Erfassungsergebnisses der Oberflächenrauigkeit die Menge des Haftmittels geändert wird. Zusätzlich oder alternativ kann die Temperatur des Haftmittels geändert werden.

Dabei kann die Temperatur des Haftmittels sowohl im Auftragselement geändert werden als auch durch Veränderung der Energieeinbringung in das - auf dem Beschichtungsmaterial befindlichen - Haftmittel. Das Einwirken auf das am Beschichtungsmaterial vorgesehene Haftmittel kann beispielsweise mittels eines Lasers, einer Heißluftquelle, Infrarotquelle, Ultraschallquelle, Magnetfeldquelle, Mikrowellenquelle, Plasmaquelle und/oder Begasungsquelle erfolgen.

Es ist bevorzugt, dass die Oberflächeneigenschaft eine Oberflächentemperatur ist, wobei bevorzugt ist, dass auf Grundlage des Erfassungsergebnisses der Oberflächentemperatur die Temperatur des Haftmittels geändert und/oder durch eine Temperierungsvorrichtung auf die zu beschichtende Oberfläche eingewirkt wird.

Gemäß einer besonders bevorzugten Variante werden die Oberflächenrauigkeit und die Oberflächentemperatur erfasst, und die Menge des Haftmittels und/oder die Temperatur des Haftmittels geändert.

### Kurze Beschreibung der Zeichnung

Fig. 1 zeigt schematisch einen Verfahrensablauf bei einem Beschichtungsverfahren gemäß einer ersten Ausführungsform der Erfindung.
Fig. 2 zeigt eine zweite Ausführungsform der Erfindung.

### Detaillierte Beschreibung der bevorzugten Ausführungsform

Nachfolgend werden anhand der beigefügten Zeichnung bevorzugte Ausführungsformen der vorliegenden Erfindung beschrieben. Weitere in diesem Zusammenhang genannte Modifikationen bestimmter Einzelmerkmale können jeweils miteinander kombiniert werden, um weitere Ausführungsformen auszubilden.

Obwohl die Erfindung anhand der schematischen Zeichnungen, die jeweils einen Verfahrensablauf darstellen, beschrieben wird, sind aus den Zeichnungen auch Komponenten einer erfindungsgemäßen Beschichtungsvorrichtung zu entnehmen.

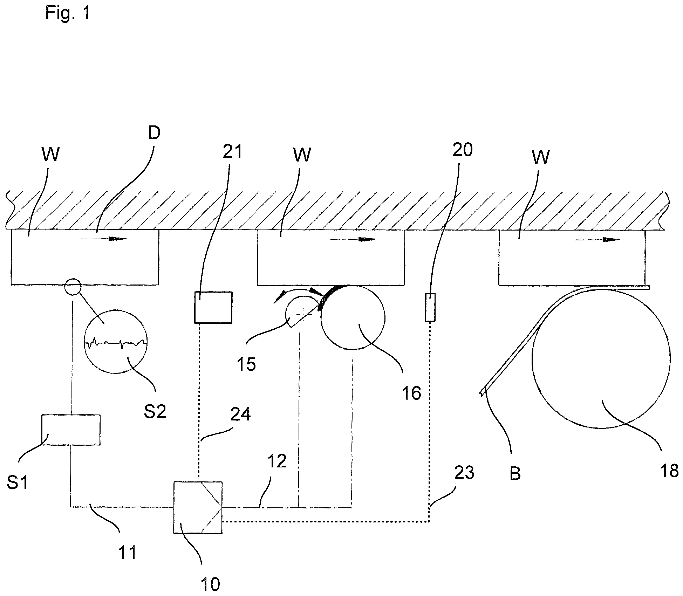

Das anhand von Figur 1 beschriebene Beschichtungsverfahren ist ein sogenanntes Durchlaufverfahren, bei dem ein Werkstück W bewegt wird, wohingegen das Beschichtungsaggregat, das unter anderem ein Auftragselement (Leimwalze) und eine Andruckrolle umfasst, im Wesentlichen stationär verbleibt. Es ist ersichtlich, dass gemäß einer weiteren Ausführungsform auch das Beschichtungsaggregat bewegt werden kann, während das Werkstück, zumindest zeitweise, stationär gehalten wird.

Das Werkstück W wird in Durchlaufrichtung D kontinuierlich bewegt, beispielsweise mittels eines Riemenförderers. Bevor das Werkstück W den Bereich des Leimauftrags erreicht, wird mit einem ersten Sensor S1 die Oberflächentemperatur in einem Bereich bestimmt, in dem das Haftmittel aufgetragen werden soll.

Mit einem zweiten Sensor S2 kann die Oberflächenkontur/Oberflächenrauigkeit in dem Bereich bestimmt werden, in dem das Haftmittel aufgetragen werden soll. Beispielsweise wird die Oberfläche des Werkstücks mit einem Laserstrahl abgetastet und anhand der reflektierten Anteile die Rauigkeit bestimmt. Somit kann ermittelt werden, ob es sich um eine Spanplatte mit relativ großen Poren oder eine Massivholzplatte mit einer relativ glatten Oberfläche handelt.

Der erste Sensor S1 und der zweite Sensor S2 befinden sich über eine Leitung 11 mit einer Steuereinrichtung 10 der Beschichtungsvorrichtung in Verbindung. Die Steuervorrichtung 10 kann eine zentrale oder eine dezentrale Steuervorrichtung sein. Mittels der Steuervorrichtung 10 werden die von den Sensoren S1, S2 ermittelten Werte aufgenommen und wie nachfolgend beschrieben bewertet.

Die Steuereinrichtung 10 befindet sich ferner über eine zweite Leitung 12 in Verbindung mit einer Dosiereinrichtung 15 und einem Auftragselement 16 (insbesondere Leimwalze).

Im Ausführungsbeispiel ist in Durchlaufrichtung D vor dem Auftragselement 16 eine Temperierungseinrichtung 21 als ein Beispiel einer Manipulationsvorrichtung zum Manipulieren einer zu beschichtenden Oberfläche vorgesehen. Mit der Temperierungseinrichtung 21 kann die Oberfläche des Werkstücks W vorgewärmt werden, beispielsweise wenn mit dem ersten Sensor S1 erfasst wurde, dass die Werkstückoberfläche eine zu niedrige Temperatur aufweist. Auch kann die Werkstückoberfläche gekühlt werden, wenn eine zu hohe Temperatur erfasst wurde. Die Temperierungseinrichtung 21 ist mittels der Leitung 24 mit der Steuereinrichtung in Verbindung.

In Durchlaufrichtung D nach dem Auftragselement 16 ist eine Prüfeinrichtung 20 vorgesehen, die mit der Leitung 23 mit der Steuereinrichtung 10 in Verbindung steht. Vorliegend ist die Prüfeinrichtung als Temperatursensor ausgebildet, um die Temperatur des aufgetragenen Haftmittels zu prüfen.

Anhand der von der Steuereinrichtung 10 bewerteten Daten der Sensoren S1, S2 wird die Stellung der Dosiereinrichtung 15, die um eine Achse drehbar ist, eingestellt, um die Menge des Haftmittels zu steuern, das mit dem Auftragselement 16 an der Schmalseite des Werkstücks W aufgebracht werden soll.

Handelt es sich beispielsweise um eine Spanplatte mit relativ großen Poren an der zu beschichtenden Oberfläche, so wird eine größere Haftmittelmenge erforderlich sein als bei einer relativ glatten Oberfläche eines Massivholzstücks. Bei der Auswahl der Klebstoffmenge ist dabei eine Abwägung zwischen optimaler Haftwirkung und möglichst dünner Klebefuge zu treffen.

Somit kann beispielsweise bei einer relativ rauen Werkstückoberfläche, die durch den Sensor S2 erfasst wurde, die Menge des aufzutragenden Haftmittels erhöht werden, da das Haftmittel auch in Poren des Werkstücks eindringt. Handelt es sich hingegen um eine glatte Werkstückoberfläche, so ist die Menge des Haftmittels zu reduzieren, um zu verhindern, dass ein zu dicker Haftmittelfilm am Werkstück ausgebildet wird.

Darüber hinaus ist die Steuereinrichtung 10 mit einem Heizelement (nicht gezeigt) eines Haftmittelbehälters (nicht gezeigt) und/oder einer Heizpatrone im Auftragselement 16 in Verbindung, um die Temperatur des Haftmittels am Auftragselement 16 einzustellen.

Im Ausführungsbeispiel gemäß Figur 1 ist zusätzlich zur Möglichkeit, das Haftmittel im Haftmittelbehälter und/oder am Auftragselement 16 zu erwärmen, die Temperierungsvorrichtung 21 vorgesehen, um die Temperatur der Werkstückoberfläche ggf. zu ändern und somit die Temperatur des aufgetragenen Haftmittels zu steuern.

Wird mittels des ersten Sensors S1 eine relativ hohe Werkstücktemperatur erfasst, so kann die Temperatur des Haftmittels H reduziert und/oder die Oberfläche des Werkstücks W durch die Temperierungsvorrichtung 21 gekühlt werden. Eine relativ hohe Temperatur an der Schmalseite des Werkstücks W kann beispielsweise dann vorliegen, wenn die Umgebungstemperatur bereits relativ hoch ist oder unmittelbar vor dem Auftragen des Haftmittels ein Bearbeitungsschritt im Bereich der zu beschichtenden Fläche des Werkstücks durchgeführt wird.

Nachdem das Werkstück W nunmehr mit einem optimal an das Werkstück W angepassten Haftmittelfilm versehen wurde, wird das Werkstück weiter in Richtung eines Andruckelements 18 bewegt. Die Prüfeinrichtung 20 überprüft das aufgetragene Haftmittel, insbesondere dessen Temperatur und/oder die Dicke des Haftmittelfilms.

Das Andruckelement 18 wird dazu verwendet, ein Beschichtungsmaterial B, das in der Länge der zu beschichtenden Fläche zugeschnitten wurde und zugeschnitten wird, an die mit dem Haftmittel versehene Schmalseite des Werkstücks anzudrücken.

Nach Anbringen des Beschichtungsmaterials können Nachbearbeitungsschritte durchgeführt werden.

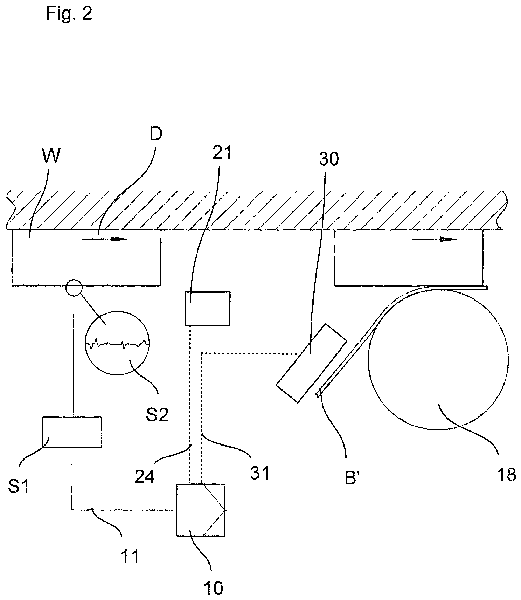

Nachfolgend wird anhand der schematischen Darstellung in Figur 2 eine zweite Ausführungsform der Erfindung beschrieben. Gleiche oder ähnliche Komponenten sind mit entsprechenden Bezugszeichen versehen. Zur detaillierten Beschreibung dieser Komponenten wird auf die Erläuterungen zur ersten Ausführungsform verwiesen.

Die Beschichtungsvorrichtung gemäß der zweiten Ausführungsform umfasst, wie die erste Ausführungsform, einen ersten Sensor S1 und einen zweiten Sensor S2, die über eine Leitung 11 mit einer Steuervorrichtung 10 in Verbindung stehen. Ferner ist eine Manipulationsvorrichtung 21 vorgesehen, die über eine Leitung 24 mit der Steuervorrichtung 10 in Verbindung steht.

Die zweite Ausführungsform unterscheidet sich dadurch von der ersten Ausführungsform, dass anstelle eines Haftmittelauftrags auf das Werkstück eine Aktivierung eines an einem Beschichtungsmaterial B' vorgesehen Haftmittels durchgeführt wird. Beim Beschichtungsmaterial B' kann es sich um ein koextrudiertes Beschichtungsmaterial oder ein mit einer Haftschicht versehenes Trägermaterial handeln.

Somit ist gemäß der zweiten Ausführungsform eine Aktivierungsvorrichtung 30 vorgesehen, die mit mittels einer Leitung 30 mit der Steuervorrichtung 10 verbunden ist. Die Aktivierungsvorrichtung 30 ist eingerichtet, das Haftmittel oder die haftvermittelnde Schicht des Beschichtungsmaterials B' zu aktivieren, insbesondere zu erwärmen.

Wird anhand des ersten Sensors S1 eine erhöhte Oberflächentemperatur am Werkstück ermittelt, so kann die Steuereinrichtung 10 bestimmen, dass die Aktivierungsvorrichtung 30 mit verringerter Leistung zu betreiben ist, so dass das Haftmittel oder die haftvermittelnde Schicht des Beschichtungsmaterials B' in reduziertem Maße aktiviert wird.

Sollte anhand des zweiten Sensors S2 erfasst werden, dass die zu beschichtende Oberfläche eine erhöhte Oberflächenrauigkeit aufweist, so kann die Steuervorrichtung 10 bestimmen, dass die Aktivierungsvorrichtung 30 mit erhöhter Leistung zu betreiben ist. Folglich wird das Haftmittel oder die haftvermittelnde Schicht des Beschichtungsmaterials B' in verstärktem Maße aktiviert wird. Folglich wird die Fließfähigkeit des Haftmittels auf einem erhöhten Maß gehalten und das Haftmittel dringt entsprechend stärker in die Poren der Werkstückoberfläche ein.

Bezüglich der Funktionsweise der Manipulationsvorrichtung 21 wird auf die Erläuterungen zur ersten Ausführungsform verwiesen. Die Manipulationsvorrichtung 21 kann dazu genutzt werden, die zu beschichtende Oberfläche vorzubereiten, insbesondere zu Erwärmen oder zu Kühlen.

Obwohl in den Ausführungsbeispielen Leitungen beschrieben werden, um die Sensoren S1, S2, die Manipulationsvorrichtung 21, die Prüfeinrichtung 20 oder eine Aktivierungsvorrichtung 30 mit der Steuereinrichtung zu verbinden, kann die Datenübertragung auch kabellos erfolgen.

## Patentansprüche

1. Beschichtungsvorrichtung zum Beschichten eines, insbesondere plattenförmigen, Werkstücks (W) mit einem Beschichtungsmaterial (B, B'), umfassend:
ein Andruckelement (18) zum Anbringen eines Beschichtungsmaterials (B, B') an einer zu beschichtenden Oberfläche eines Werkstücks (W), insbesondere einer Schmalseite eines Werkstücks, und
eine Einrichtung zum Herbeiführen einer Relativbewegung zwischen dem Werkstück (W) und dem Andruckelement (18),
eine Erfassungseinrichtung (S1, S2) zum Erfassen einer Oberflächeneigenschaft an der zu beschichtenden Oberfläche des Werkstücks (W) und einer Einrichtung zum Einwirken auf das einzusetzende Haftmittel basierend auf dem Erfassungsergebnis der Erfassungseinrichtung, und
ein Auftragselement (16) zum Auftragen des Haftmittels an der zu beschichtenden Oberfläche des Werkstücks (W),
**dadurch gekennzeichnet, dass** die Beschichtungsvorrichtung eingerichtet ist, auf Grundlage des Erfassungsergebnisses der Erfassungseinrichtung (S1, S2) die Haftmitteltemperatur im Bereich des Auftragselements (16) zu ändern.

2. Beschichtungsvorrichtung gemäß Anspruch 1, **gekennzeichnet durch** eine Steuereinrichtung (10), die eingerichtet ist, das Erfassungsergebnis der Erfassungseinrichtung (S1, S2) aufzunehmen und verarbeiten, und die Einrichtung zum Einwirken auf das einzusetzende Haftmittel zu betätigen.

3. Beschichtungsvorrichtung gemäß einem der vorangegangenen Ansprüche, **dadurch gekennzeichnet, dass** die Erfassungseinrichtung (S1, S2) derart angeordnet ist, dass die Erfassungseinrichtung die Oberflächeneigenschaft unmittelbar vor dem Auftragen des Haftmittels oder dem Anbringen des mit dem Haftmittel versehenen Beschichtungsmaterials (B') erfasst.

4. Beschichtungsvorrichtung gemäß einem der vorangegangenen Ansprüche, **dadurch gekennzeichnet, dass** das Auftragselement ein Heizelement aufweist.

5. Beschichtungsvorrichtung gemäß einem der vorangegangenen Ansprüche, **gekennzeichnet durch**
eine Dosiereinrichtung (15) zum Ändern der durch das Auftragselement (16) am Werkstück (W) aufzubringenden Haftmittelmenge,
wobei die Dosiereinrichtung (15) eingerichtet ist, auf Grundlage des Erfassungsergebnisses der Erfassungseinrichtung die Haftmittelmenge zu ändern.

6. Beschichtungsvorrichtung gemäß einem der vorangegangenen Ansprüche, **gekennzeichnet durch** eine Prüfeinrichtung (20) zum Prüfen des durch das Auftragselement (16) aufgetragenen Haftmittels, wobei die Prüfeinrichtung (20) bevorzugt einen Temperatursensor, insbesondere ein IR-Temperatursensor, umfasst.

7. Beschichtungsvorrichtung gemäß einem der Ansprüche 1-3, **gekennzeichnet durch** eine Aktivierungsvorrichtung (30), die eingerichtet ist, das Haftmittel des mit dem Haftmittel versehenen Beschichtungsmaterials (B') basierend auf dem Erfassungsergebnis der Erfassungseinrichtung (S1, S2) zu aktivieren.

8. Beschichtungsvorrichtung gemäß einem der vorangegangenen Ansprüche, **gekennzeichnet durch** eine Manipulationsvorrichtung (21), insbesondere eine Temperierungseinrichtung, zum Manipulieren, insbesondere Erwärmen und/oder Kühlen, der zu beschichtenden Oberfläche, wobei bevorzugt ist, dass die Manipulationsvorrichtung (21) in Durchlaufrichtung (D) nach der Erfassungseinrichtung (S1, S2) und vor dem Andruckelement (16) vorgesehen, weiter bevorzugt zwischen der Erfassungseinrichtung (S1, S2) und dem Auftragselement zum Auftragen des Haftmittels vorgesehen ist.

9. Beschichtungsvorrichtung gemäß einem der vorangegangenen Ansprüche, **dadurch gekennzeichnet, dass** die Erfassungseinrichtung einen Sensor (S2) zum Erfassen der Oberflächenrauigkeit umfasst, und/oder
die Erfassungseinrichtung einen Sensor (S1) zum Erfassen der Oberflächentemperatur umfasst, insbesondere einen IR-Temperatursensor.

10. Beschichtungsvorrichtung gemäß einem der vorangegangenen Ansprüche, **dadurch gekennzeichnet, dass** die Einrichtung zum Herbeiführen einer Relativbewegung zwischen Werkstück (W) und dem Andruckelement (18) ein Riemenförderer, ein Kettenförderer oder ein Bandförderer ist.

11. Verfahren zum Beschichten eines Werkstücks, insbesondere einer Schmalseite eines plattenförmigen Werkstücks, umfassend die Schritte:
Herbeiführen einer Relativbewegung zwischen einem Werkstück (W) und einem Andruckelement (18) zum Anbringen eines Beschichtungsmaterials (B, B') an einer zu beschichtenden Oberfläche des Werkstücks (W),
Erfassen einer Oberflächeneigenschaft an der zu beschichtenden Oberfläche des Werkstücks (W),
Einwirken auf das Haftmittel zum Anhaften des Beschichtungsmaterials (B, B') an der zu beschichtenden Oberfläche, und
Anbringen des Beschichtungsmaterials (B, B') an der zu beschichtenden Oberfläche des Werkstücks (W).
wobei das Haftmittel vor dem Anbringen des Beschichtungsmaterials (B) an der zu beschichtenden Oberfläche des Werkstücks (W) aufgebracht wird,
wobei auf Grundlage des Erfassungsergebnisses der Erfassung der Oberflächeneigenschaft die Haftmitteltemperatur im Bereich des Auftragselements (16) geändert wird.

12. Verfahren gemäß Anspruch 11, **dadurch gekennzeichnet, dass** die Oberflächeneigenschaft eine Oberflächenrauigkeit ist, wobei bevorzugt ist, dass auf Grundlage des Erfassungsergebnisses der Oberflächenrauigkeit die Menge des Haftmittels geändert wird.

13. Verfahren gemäß einem der Ansprüche 11-12, **dadurch gekennzeichnet, dass** die Oberflächeneigenschaft eine Oberflächentemperatur ist, wobei bevorzugt ist, dass auf Grundlage des Erfassungsergebnisses der Oberflächentemperatur die Temperatur des Haftmittels geändert und/oder durch eine Temperierungsvorrichtung (21) auf die zu beschichtende Oberfläche des Werkstücks (W) eingewirkt wird.

## Claims

1. Coating device for coating an, in particular planar, workpiece (W) with a coating material (B, B'), comprising:
a pressing element (18) for affixing a coating material (B, B') to a workpiece (W) surface to be coated, in particular a narrow side of a workpiece, and
an apparatus for causing a relative movement between the workpiece (W) and the pressing element (18),
a detection apparatus (S1, S2) for detecting a surface property on the workpiece (W) surface to be coated and an apparatus for acting on the adhesive to be used based on the detection result of the detection apparatus, and
an application element (16) for applying the adhesive to the workpiece (W) surface to be coated,
**characterised in that** the coating device is designed to change the adhesive temperature in the region of the application element (16) based on the detection result of the detection apparatus (S1, S2).

2. Coating device according to claim 1, **characterised by** a control apparatus (10), which is designed to record and process the detection result of the detection apparatus (S1, S2), and to actuate the apparatus for acting on the adhesive to be used.

3. Coating device according to any of the preceding claims, **characterised in that** the detection apparatus (S1, S2) is arranged such that the detection apparatus detects the surface property immediately before the adhesive is applied or the coating material (B') provided with the adhesive is affixed.

4. Coating device according to any of the preceding claims, **characterised in that** the application element comprises a heating element.

5. Coating device according to any of the preceding claims, **characterised by**
a dosing apparatus (15) for changing the amount of adhesive to be applied to the workpiece (W) by the application element (16),
wherein the dosing apparatus (15) is designed to change the amount of adhesive based on the detection result of the detection apparatus.

6. Coating device according to any of the preceding claims, **characterised by** a checking apparatus (20) for checking the adhesive applied by the application element (16), wherein the checking apparatus (20) preferably comprises a temperature sensor, in particular an IR temperature sensor.

7. Coating device according to any of claims 1 to 3, **characterised by** an activation device (30), which is designed to activate the adhesive of the coating material (B') provided with the adhesive based on the detection result of the detection apparatus (S1, S2).

8. Coating device according to any of the preceding claims, **characterised by** a manipulation device (21), in particular a temperature control apparatus, for manipulating, in particular heating and/or cooling, the surface to be coated, wherein it is preferred that the manipulation device (21) is provided downstream of the detection apparatus (S1, S2) and upstream of the pressing element (16) in the throughput direction (D), more preferably between the detection apparatus (S1, S2) and the application element for applying the adhesive.

9. Coating device according to any of the preceding claims, **characterised in that** the detection apparatus comprises a sensor (S2) for detecting the surface roughness, and/or
the detection apparatus comprises a sensor (S1) for detecting the surface temperature, in particular an IR temperature sensor.

10. Coating device according to any of the preceding claims, **characterised in that** the apparatus for causing a relative movement between the workpiece (W) and the pressing element (18) is a belt conveyor, a chain conveyor or a band conveyor.

11. Method for coating a workpiece, in particular a narrow side of a planar workpiece, comprising the steps of:
causing a relative movement between a workpiece (W) and a pressing element (18) for affixing a coating material (B, B') to a workpiece (W) surface to be coated,
detecting a surface property on the workpiece (W) surface to be coated,
acting on the adhesive to stick the coating material (B, B') on the surface to be coated, and
affixing the coating material (B, B') to the workpiece (W) surface to be coated,
wherein the adhesive is applied before the coating material (B) is affixed to the workpiece (W) surface to be coated,
wherein the adhesive temperature in the region of the application element (16) is changed based on the detection result of the surface property detection.

12. Method according to claim 11, **characterised in that** the surface property is a surface roughness, wherein it is preferred that the amount of adhesive is changed based on the detection result of the surface roughness.

13. Method according to any of claims 11 to 12, **characterised in that** the surface property is a surface temperature, wherein it is preferred that the temperature of the adhesive is changed and/or a temperature control device (21) acts on the workpiece (W) surface to be coated based on the detection result of the surface temperature.

## Revendications

1. Dispositif de revêtement pour le revêtement d'une pièce à usiner (W), en particulier en forme de plaque, avec un matériau de revêtement (B, B'), comprenant :
un élément de pression (18) pour appliquer un matériau de revêtement (B, B') sur une surface à revêtir d'une pièce à usiner (W), en particulier un côté étroit d'une pièce à usiner, et
un dispositif pour provoquer un mouvement relatif entre la pièce à usiner (W) et l'élément de pression (18),
un appareil de détection (S1, S2) pour détecter une propriété de surface sur la surface à revêtir de la pièce à usiner (W) et un dispositif pour agir sur l'adhésif à utiliser sur la base du résultat de détection de l'appareil de détection, et
un élément d'application (16) pour appliquer l'adhésif sur la surface à revêtir de la pièce à usiner (W),
**caractérisé en ce que** le dispositif de revêtement est configuré pour modifier la température d'adhésif dans la plage de l'élément d'application (16) sur la base du résultat de détection de l'appareil de détection (S1, S2).

2. Dispositif de revêtement selon la revendication 1, **caractérisé par** un dispositif de revêtement (10) qui est configuré pour enregistrer et traiter le résultat de détection de l'appareil de détection (S1, S2), et pour actionner le dispositif de sorte à agir sur l'adhésif à utiliser.

3. Dispositif de revêtement selon l'une quelconque des revendications précédentes, **caractérisé en ce que** l'appareil de détection (S1, S2) est disposé de sorte que l'appareil de détection détecte la propriété de surface immédiatement avant l'application de l'adhésif ou l'application du matériau de revêtement (B') doté de l'adhésif.

4. Dispositif de revêtement selon l'une quelconque des revendications précédentes, **caractérisé en ce que** l'élément d'application présente un élément chauffant.

5. Dispositif de revêtement selon l'une quelconque des revendications précédentes, **caractérisé par**
un dispositif de dosage (15) pour modifier la quantité d'adhésif à appliquer sur la pièce à usiner (W) par l'élément d'application (16),
dans lequel le dispositif de dosage (15) est configuré pour modifier la quantité d'adhésif sur la base du résultat de détection de l'appareil de détection.

6. Dispositif de revêtement selon l'une quelconque des revendications précédentes, **caractérisé par** un appareil de contrôle (20) pour contrôler l'adhésif appliqué par l'élément d'application (16), dans lequel l'appareil de contrôle (20) comprend de préférence un capteur de température, en particulier un capteur de température IR.

7. Dispositif de revêtement selon l'une quelconque des revendications 1-3, **caractérisé par** un dispositif d'activation (30) qui est configuré pour activer l'adhésif du matériau de revêtement (B') doté de l'adhésif sur la base du résultat de détection de l'appareil de détection (S1, S2).

8. Dispositif de revêtement selon l'une quelconque des revendications précédentes, **caractérisé par** un dispositif de manipulation (21), en particulier un appareil de régulation de température, pour manipuler, en particulier chauffer et/ou refroidir, la surface à revêtir, dans lequel le dispositif de manipulation (21) est de préférence prévu dans la direction de passage (D) après l'appareil de détection (S1, S2) et avant l'élément de pression (16), plus préférentiellement est prévu entre l'appareil de détection (S1, S2) et l'élément d'application pour l'application de l'adhésif.

9. Dispositif de revêtement selon l'une quelconque des revendications précédentes, **caractérisé en ce que** l'appareil de détection comprend un capteur (S2) pour détecter la rugosité de surface, et/ou
l'appareil de détection comprend un capteur (S1) pour détecter la température de surface, en particulier un capteur de température IR.

10. Dispositif de revêtement selon l'une quelconque des revendications précédentes, **caractérisé en ce que** l'appareil pour provoquer un mouvement relatif entre pièce à usiner (W) et l'élément de pression (18) est un convoyeur à courroie, un convoyeur à chaîne ou un convoyeur à bande.

11. Procédé de revêtement d'une pièce à usiner, en particulier d'un côté étroit d'une pièce à usiner en forme de plaque, comprenant les étapes consistant à :
provoquer un mouvement relatif entre une pièce à usiner (W) et un élément de pression (18) pour appliquer un matériau de revêtement (B, B') sur une surface à revêtir de la pièce à usiner (W),
détecter une propriété de surface sur la surface à revêtir de la pièce à usiner (W),
agir sur l'adhésif pour faire adhérer le matériau de revêtement (B, B') sur la surface à revêtir, et
appliquer le matériau de revêtement (B, B') sur la surface à revêtir de la pièce à usiner (W),
dans lequel l'adhésif est appliqué à la surface à revêtir de la pièce à usiner (W) avant d'appliquer le matériau de revêtement (B),
dans lequel la température d'adhésif dans la plage de l'élément d'application (16) est modifiée sur la base du résultat de détection de la propriété de surface.

12. Procédé selon la revendication 11, **caractérisé en ce que** la propriété de surface est une rugosité de surface, dans lequel la quantité de l'adhésif est de préférence modifiée sur la base du résultat de détection de la rugosité de surface.

13. Procédé selon l'une quelconque des revendications 11-12, **caractérisé en ce que** la propriété de surface est une température de surface, dans lequel, sur la base du résultat de détection de la température de surface, la température de l'adhésif est de préférence modifiée et/ou on agit à la surface à revêtir de la pièce à usiner (W) par un dispositif de régulation de température (21).
